# EUROPÄISCHE PATENTSCHRIFT

(11) **EP 1 044 842 B1**
(45) Veröffentlichungstag und Bekanntmachung des Hinweises auf die Patenterteilung: **28.02.2007**
(21) Anmeldenummer: 00104507.9
(22) Anmeldetag: 10.03.2000
(51) Int. Cl.: B60W 10/02, B60W 10/06, B60W 10/10

(54) **Verfahren zum Herausnehmen einer Gangstufe bei einem automatisierten Stufenwechselgetriebe**
Gear disengagement method for an automatised multiple ratio gearbox
Méthode pour désengager un rapport dans une boîte de vitesses automatisée à rapports multiples

(30) Priorität: 16.04.1999 DE 19917293
(43) Veröffentlichungstag der Anmeldung: 18.10.2000
(73) Patentinhaber: Volkswagen Aktiengesellschaft, 38436 Wolfsburg (DE)
(72) Erfinder: Cappelmann, Bernd, 38167 Wendeburg (DE); Damm, Ansgar, Dr., 38518 Gifhorn (DE); Fähland, Jörg, 38524 Sassenburg (DE)
(74) Vertreter: Hübsch, Dirk

(56) Entgegenhaltungen:
- EP-A- 0 813 985
- EP-A- 1 031 769
- WO-A-93/00227
- DE-A- 19 709 417
- DE-A- 19 725 816
- DE-A- 19 735 759

## Beschreibung

Die vorliegende Erfindung betrifft ein Verfahren zum Herausnehmen einer Gangstufe eines mit einer automatisierten Reibungskupplung ausgestatteten automatisierten Stufenwechselgetriebes.

Automatisierte Getriebe der hier in Rede stehenden Art besitzen im wesentlichen ein Stufenwechselgetriebe in der Form eines Handschaltgetriebes, eine Vorrichtung zum automatisierten Einlegen und Herausnehmen oder Auslegen der Gänge und eine automatisierte Reibungskupplung. Die genannten Bauteile werden dabei über ein Steuergerät gesteuert, so daß das automatisierte Schaltgetriebe hochschaltet und auch herunterschaltet.

Wenn nun infolge einer beispielsweise vom Fahrprogramm festgestellten Gangwechselentscheidung der aktuell eingelegte Gang gewechselt werden muß, so muß von dem Steuergerät der gleiche Vorgang nachgebildet werden, wie er bei einem bekannten Handschaltgetriebe auch vom Fahrer des damit ausgestatteten Kraftfahrzeugs durchgeführt wird.

Der automatisierte Gangwechselvorgang setzt sich daher dadurch zusammen, daß das Motormoment verringert wird, die Kupplung zum Auslegen des Ganges geöffnet wird, der zu wechselnde Gang ausgelegt wird, der neue Gang eingelegt wird, und dann die Kupplung wieder geschlossen wird, gefolgt von einem Aufbau des Motormoments zur weiteren Beschleunigung des Fahrzeugs.

Der vorstehend beschriebene Gangwechselvorgang soll dabei möglichst ohne Ruckeln des Fahrzeugs ablaufen, da ein solches Ruckeln vom Fahrer als komfortmindernd empfunden wird. Die Ursache hiefür liegt darin, daß sich der Fahrer auf den automatisierten Gangwechselvorgang, anders als bei einem von ihm selbst durchgeführten Gangwechselvorgang, nicht vorbereiten kann und er von ihm gleichsam überrascht wird.

Bei dem automatisierten Gangwechselvorgang kommt dem rechtzeitigen Öffnen der Kupplung zu Beginn der Schaltung eine große Bedeutung zu, um den Gang herausnehmen zu können. Es hat sich nämlich gezeigt, daß der Triebstrang genau in dem Augenblick geöffnet werden sollte, in dem der Motor kein Moment mehr über den Triebstrang abgibt. Wenn nämlich der Triebstrang zu früh geöffnet wird, d. h. also in einem Augenblick, in dem der Motor noch ein Moment über den Triebstrang abgibt, dann führt ein Öffnen der Kupplung zu einem Hochdrehen des Motors. Auch empfindet der Fahrer dieses Öffnen des Triebstrangs bei noch anliegendem Motormoment als unangenehm, denn es kommt durch dieses Öffnen zu einem Beschleunigungsstoß des Fahrzeugs entgegen der Fahrtrichtung.

Wenn dahingegen der Triebstrang zu spät geöffnet wird, dann befindet sich das Fahrzeug bereits im Schubbetrieb mit einem über die Antriebsräder in den Triebstrang eingeleiteten Schubmoment, was auf den Fahrer noch unangenehmer wirkt, da sich das Fahrzeug beim plötzlichen Zusammenbrechen des Schubmoments in einer negativen Beschleunigungsphase befunden hat. Die vorstehend geschilderte Problematik stellt sich insbesondere bei geringen Antriebsmomenten und bei kleinen Gängen ein.

Es ist bereits ein Verfahren bekannt geworden, diese Probleme zu umgehen, welches darin besteht, daß das aus Tabellen bekannte oder vom Motor beispielsweise über einen CAN-Bus zurückgemeldete Drehmoment ausgewertet wird und die Kupplung gerade in dem Moment geöffnet wird, während dem ein Nullmoment vorliegt. Diese Vorgehensweise hat aber den Nachteil, daß das ermittelte oder zurückgemeldete Drehmoment vom tatsächlich vorhandenen Drehmoment abweichen kann und zwar beispielsweise aufgrund von Alterungseinflüssen, unterschiedlichen Treibstoffqualitäten, Temperaturen, zunehmenden Fertigungstoleranzen, und dergleichen und auch den weiteren Nachteil, daß zum Öffnen der Kupplung eine Zeit benötigt wird, die beispielsweise auch temperaturbedingten Schwankungen unterworfen ist und sich somit bei verschiedenen Betriebsbedingungen des mit dem automatisierten Schaltgetriebe ausgestatteten Kraftfahrzeugs ändert.

Schließlich ist aus der DE 197 09 417 A1 ein Verfahren zur Steuerung eines Drehmomentübertragungssystems bekannt, bei dem sich ein Motorschleppmoment bei vollständig geöffneter Kupplung einstellt und der Schaltvorgang im wesentlichen bei vollständig geöffneter Kupplung abläuft.

Es ist nun eine Aufgabe der Erfindung, ein Verfahren zum Herausnehmen einer Gangstufe zu schaffen, welches die genannten Komforteinbußen sicher vermeidet.

Die Erfindung weist zur Lösung dieser Aufgabe die im Anspruch 1 angegebenen Merkmale auf. Vorteilhafte Ausgestaltungen des Verfahrens sind in den weiteren Ansprüchen beschrieben.

Es ist nach der Erfindung ein Verfahren zum Herausnehmen einer Gangstufe eines mit einer automatisierten Reibungskupplung ausgestatteten automatisierten Stufenwechselgetriebes vorgesehen, welches sich dadurch auszeichnet, daß an der Reibungskupplung eine Schlupfbedingung herbeigeführt wird, das vom Motor abgegebene Moment auf weitgehend Null verringert wird, die Schlupfbedingung während der Verrringerung des Motormoments aufrecht erhalten wird und die Gangstufe bei unverspanntem Triebstrang herausgenommen wird. Wenn von der Steuervorrichtung festgestellt wird, daß der gerade eingelegte Gang ausgelegt werden soll, dann wird an der Reibungskupplung für eine vorbestimmte Zeitdauer ein Schlupfzustand oder eine Schlupfbedingung eingestellt, das Motormoment verringert und die Schlupfbedingung mit fortdauernder Verringerung des Motormoments beibehalten, wodurch erreicht wird, daß die Kupplung genau in dem Augenblick geöffnet haben wird, wenn sich der Triebstrang nicht mehr unter Spannung befindet.

Nach einer vorteilhaften Weiterbildung ist vorgesehen, daß die Schlupfbedingung für eine vorbestimmte Zeitdauer von insbesondere etwa null bis einer Sekunde aufrecht erhalten wird. Die Schlupfbedingung kann dabei über eine Auswertung des Kupplungsweges festgestellt werden, wobei auch möglich ist, die Auswertung einer Drehzahldifferenz zwischen dem Motor und einer Getriebeeingangswelle zur Feststellung der Schlupfbedingung heranzuziehen.

Wenn der Kupplungsweg zur Festellung der Schlupfbedingung herangezogen wird, dann kann der festgestellte Kupplungsweg auch beim Schließen der Kupplung für insbesondere einen Anfahrvorgang als Einkuppelpunkt für die Steuerung eines Kupplungsstellgliedes verwendet werden, welches die automatisierte Reibungskupplung steuert.

Es ist von Vorteil, wenn die über die Kupplung während der Schlupfbedingung übertragene Reibkraft bei einer einen vorbestimmten Wert übersteigenden Motordrehzahl erhöht wird, so daß ein Hochdrehen des Motors verringert wird, indem die im Schlupfzustand der Kupplung übertragene Reibkraft durch die Kupplung erhöht wird, wodurch das Hochdrehen des Motors sicher unterbunden wird.

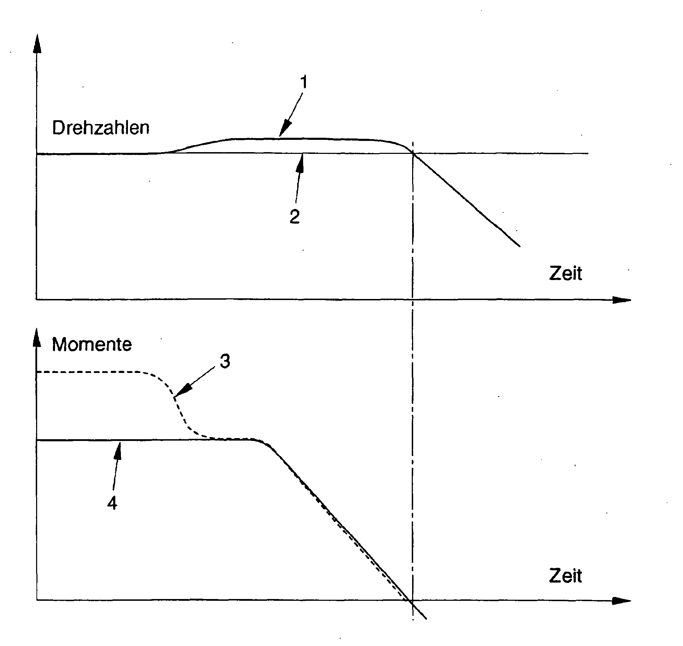

Die Erfindung wird im folgenden anhand eines in der Figur dargestellten Diagramms weiter erläutert werden.

Das Diagramm zeigt in der oberen Hälfte einen Verlauf der Drehzahl der Getriebeeingangswelle und des Motors aufgetragen über der Zeit und in der unteren Hälfte einen Verlauf des von der Kupplung übertragbaren Moments und des Motormoments aufgetragen über der Zeit.

Wie es anhand der Zeichnung ohne weiteres ersichtlich ist, verläuft in einem eingekuppelten Zustand der Kupplung die Motordrehzahl 1 gleich der Drehzahl der Getriebeeingangswelle 2.

In dem eingekuppelten Zustand liegt das von der Kupplung übertragbare Moment 3 mit einem Sicherheitsfaktor versehen höher als das vom Motor abgegebene Moment 4. Wenn von einer Steuereinrichtung eine Gangwechselentscheidung getroffen worden ist, dann wird das von der Kupplung übertragbare Moment 3 verringert und eine Schlupfbedingung an der Kupplung eingestellt, wobei hierzu beispielsweise über eine Kupplungsstelleinrichtung die Kupplung so angesteuert wird, daß das von ihr übertragbare Moment weiter verringert wird, bis sich ein entsprechender Schlupfzustand einstellt, der sich durch eine geringe Drehzahldifferenz der Getriebeeingangswelle 2 und des Motors 1 auszeichnet.

Wenn die Schlupfbedingung eingestellt worden ist und in der vorstehend beschriebenen Weise sich eine Drehzahldifferenz eingestellt hat, dann wird das vom Motor abgegebene Moment 4 weiter verringert, wobei während des gesamten Vorgangs der Verringerung des Motormoments die Schlupfbedingung an der Kupplung weiterhin aufrecht erhalten wird. Wenn das vom Motor abgegebene Moment auf Null verringert worden ist, kann die Kupplung zum Auslegen des Ganges vollständig geöffnet werden, da in diesem Augenblick der Triebstrang des Kraftfahrzeuges nicht mehr unter Spannung steht. In dem spannungsfreien Zustand des Triebstranges läuft das Herausnehmen des Ganges ohne Ruckeln ab.

### BEZUGSZEICHENLISTE

- 1: Motordrehzahl
- 2: Getriebeeingangswellendrehzahl
- 3: übertragbares Moment
- 4: abgegebenes Moment

## Patentansprüche

1. Verfahren zum Herausnehmen einer Gangstufe eines mit einer automatisierten Reibungskupplung ausgestatteten automatisierten Stufenwechselgetriebes, mit folgenden Schritten:
- an der Reibungskupplung wird eine Schlupfbedingung herbeigeführt;
- das vom Motor abgegebene Moment wird auf weitgehend Null verringert;
- die Schlupfbedingung wird während der Verringerung des Momentes aufrecht erhalten;
- die Gangstufe wird bei unverspanntem Triebstrang heraus genommen.

2. Verfahren nach Anspruch 1, **dadurch gekennzeichnet, daß** die Schlupfbedingung für eine vorbestimmte Zeitdauer von insbesondere etwa 0 bis 1 Sekunde aufrecht erhalten wird.

3. Verfahren nach Anspruch 1 oder 2, **dadurch gekennzeichnet, daß** die Schlupfbedingung durch eine Auswertung des Kupplungsweges festgestellt wird.

4. Verfahren nach Anspruch 1 oder 2, **dadurch gekennzeichnet, daß** die Schlupfbedingung durch eine Auswertung einer Drehzahldifferenz zwischen dem Motor und einer Getriebeeingangswelle festgestellt wird.

5. Verfahren nach Anspruch 3, **dadurch gekennzeichnet, daß** der beim Einsetzen der Schlupfbedingung festgestellte Kupplungsweg beim Schließen der Kupplung für insbesondere einen Anfahrvorgang als Einkuppelpunkt für die Steuerung eines Kupplungsstellgliedes verwendet wird.

6. Verfahren nach einem der vorstehenden Ansprüche, **dadurch gekennzeichnet, daß** die über die Kupplung während der Schlupfbedingung übertragene Reibkraft bei einer einen vorbestimmten Wert übersteigenden Motordrehzahl erhöht wird.

## Claims

1. Method for disengaging a gear stage of an automated step-by-step variable gearbox which is equipped with an automated friction clutch, having the following steps:
- a slip condition is caused at the friction clutch;
- the moment which is output by the engine is reduced to largely zero;
- the slip condition is maintained during the reduction of the moment;
- the gear stage is disengaged when the drive train is unstressed.

2. Method according to Claim 1, **characterized in that** the slip condition is maintained for a predefined time duration of from approximately 0 to 1 second.

3. Method according to Claim 1 or 2, **characterized in that** the slip condition is determined by an evaluation of the clutch travel.

4. Method according to Claim 1 or 2, **characterized in that** the slip condition is determined by an evaluation of a speed difference between the engine and a transmission input shaft.

5. Method according to Claim 3, **characterized in that** the clutch travel which is determined during initiation of the slip condition is used for the control of a clutch actuator during closure of the clutch for, in particular, a moving-off operation.

6. Method according to one of the preceding claims, **characterized in that** the friction force which is transmitted via the clutch during the slip condition is increased at an engine speed which exceeds a predefined value.

## Revendications

1. Procédé pour désengager un rapport d'une boîte de vitesses à rapports étagés automatisée munie d'un embrayage à friction automatisé, comprenant les étapes suivantes .
- une condition de glissement est imposée à l'embrayage à friction ;
- le couple fourni par le moteur est réduit à pratiquement zéro ;
- la condition de glissement est maintenue pendant la réduction du couple ;
- le rapport est désengagé avec la transmission non sollicitée.

2. Procédé selon la revendication 1, **caractérisé en ce que** la condition de glissement est maintenue pendant une durée prédéterminée notamment d'environ 0 à 1 seconde.

3. Procédé selon la revendication 1 ou 2, **caractérisé en ce que** la condition de glissement est établie par une analyse de la course d'embrayage.

4. Procédé selon la revendication 1 ou 2, **caractérisé en ce que** la condition de glissement est établie par une analyse d'une différence de vitesse entre le moteur et un arbre d'entrée de boîte de vitesses.

5. Procédé selon la revendication 3, **caractérisé en ce que** la course d'embrayage établie lors de l'ajustement de la condition de glissement est utilisée à la fermeture de l'embrayage notamment pour une opération de démarrage en tant que point d'embrayage pour la commande d'un actionneur d'embrayage.

6. Procédé selon l'une quelconque des revendications précédentes, **caractérisé en ce que** la force de frottement transmise par le biais de l'embrayage pendant la condition de glissement est augmentée si la vitesse du moteur dépasse une valeur prédéterminée.
